# EUROPEAN PATENT SPECIFICATION

(11) **EP 0 907 554 B1**
(45) Date of publication and mention of the grant of the patent: **29.12.1999**
(21) Application number: 97927487.5
(22) Date of filing: 25.06.1997
(51) Int. Cl.: B63H 5/10, B63H 23/12, B63H 23/18, F16H 37/08

(54) **DIFFERENTIAL DRIVE FOR A SHIP HAVING TWO SHIP'S SCREWS**
DIFFERENTIALANTRIEB FÜR EIN SCHIFF MIT ZWEI SCHIFFSSCHRAUBEN
ENTRAINEMENT DIFFERENTIEL POUR BATEAU A DEUX HELICES

(30) Priority: 26.06.1996 NL 1003434
(43) Date of publication of application: 14.04.1999
(73) Proprietor: SCHELDE MARITIEM B.V., 4380 AN Vlissingen (NL)
(72) Inventor: LUDOLPHIJ, Johannes, Wilhelmus, Lubbertus, NL-4384 EW Vlissingen (NL)
(74) Representative: de Bruijn, Leendert C.
(86) International application number: NL9700357
(87) International publication number: WO9749604

(56) References cited:
- DE-A- 3 939 187
- GB-A- 2 031 549
- US-A- 3 447 611

## Description

The invention relates to a ship having two ships screws, one of which is fixed to a first screw shaft of hollow construction and the other runs concentrically inside the first screw shaft, a main drive engine for the screw shafts and a differential which is mounted between the shaft of the engine and the screw shafts and which is able to make the screws rotate in opposing directions and can distribute the engine power dynamically over the screw shafts.

A ship of this type is disclosed in EP-A 0 132 220.

The aim of the invention is to supplement this installation in such a way that too high or too low a torque on one of the two shafts can be compensated for by being able to supply or take off power.

According to the invention, the ship mentioned in the preamble is, to this end, characterised in that the differential is connected via a gear transmission to a second engine or to a power take-off (PTO).

Preferably, use is made of an embodiment wherein a pinion mounted on the shaft of the main drive engine engages with a number of planetary gears which are connected to one another by means of a coupling element and are connected via shafts to auxiliary planetary gears which engage in inward-facing toothing on an annular gear with which the hollow screw shaft is in direct connection, wherein the other screw shaft has a direct connection to the coupling element and a gear mounted on the shaft of a second engine or PTO engages in toothing on the outside of the annular gear or of the coupling element.

The invention also relates to a differential for an abovementioned ship.

When a second engine is used, the entire system can be driven by the second engine, it being possible to operate at low power.

The invention will now be explained with reference to the figures.

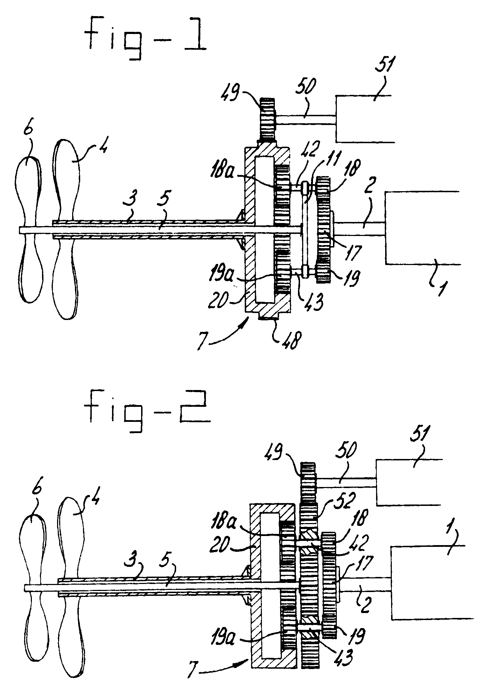

Figures 1 and 2 show, partially in cross-section, embodiments of drive mechanisms for a ship according to the invention.

The ship's drive shown in the figures comprises an engine 1, an output shaft 2 of the engine, a hollow screw shaft 3 which has a first ship's screw 4 at the rear end, a screw shaft 5 which extends through the hollow shaft 3 and has a second ship's screw 6 at the rear end, and a differential 7 which ensures that when the engine is running the screws rotate in opposing directions and that the power of the engine is distributed dynamically over the screw shafts in such a way that a higher torque or lower speed of the one screw shaft corresponds to a lower torque or higher speed of the other screw shaft.

The differential mechanism according to Figure 1 is of the planetary type and has a pinion 17 which is mounted directly on the engine shaft 2 and engages in at least two planetary gears 18, 19, which are connected to one another by means of a coupling element 11. The hollow shaft 3 is fixed to an annular gear 20. The planetary gears 18, 19 are connected via shafts 42, 43 to auxiliary planetary gears 18a, 19a, which engage in inward-facing toothing on the annular gear 20. Incidentally, three or more planetary gears can also be present.

Toothing 48 is provided on the outer edge of the annular gear 20, in which toothing a gear 49 engages which, via a shaft 50, either takes off power from the unit 51 operating as second engine or supplies power to the unit 51 operating as PTO.

In the embodiment according to Figure 2, the gear 49 does not engage in external toothing on the annular gear 20 but in a relatively large gear 52, through which the connecting shafts 41 and 42 extend between, respectively, the gears 19 and 19a and the gears 18 and 18a.

The gear 52 thus connects the planetary gears 18, 19 and in this respect has the same function as the coupling 11 in Figure 1. The shaft 5 is connected to the centre of the gear 52.

With this embodiment as well, the units 1 and 51 can act both as engine and as PTO, the condition being, of course, that when one unit functions as the engine, the other unit functions as the PTO.

The features essential to the invention are, on the one hand, that the differential is of such construction that neither of the drive shafts 3, 5 extends as far as the engine 1 and, on the other hand, that an additional engine or PTO is integrated. A positive or negative surplus of torque in one of the two shafts can be compensated for by supplying power or taking off power.

If the unit 51 is an additional engine, the entire system can be driven by said engine, in which case, for example, it is possible to operate at low power.

## Claims

1. Ship having two ship's screws, one of which is fixed to a first screw shaft of hollow construction and the other runs concentrically inside the first screw shaft, a main drive engine for the screw shafts and a differential which is mounted between the shaft of the engine and the screw shafts and which is able to make the screws rotate in opposing directions and can distribute the engine power dynamically over the screw shafts, the differential being connected via a gear transmission to a second engine or to a power take-off (PTO), characterised in that a pinion (17) mounted on the shaft (2) of the main drive engine (1) engages with a number of planetary gears (18, 18a; 19, 19a) which are connected to one another by means of a coupling element (11; 52) and which engage in inward-facing toothing on an annular gear (20) with which the hollow screw shaft (3) is in direct connection, in that the other screw shaft (5) has a direct connection to the coupling element (11; 52) and that a gear (49) mounted on the shaft (50) of a second engine or PTO engages in toothing on the outside of an annular gear (20) or of the coupling element (52).

2. Ship according to claim 1, characterised in that each planetary gear comprises a first gear (18, 19) engaging with said pinion (17) and a second auxiliary gear (18a, 19a) engaging with said inward-facing toothing on said annular gear (20), both gears (18, 18a; 19, 19a respectively) of each planetary gear being connected to one another by shafts (42, 43 respectively).

3. Differential for a ship according to claim 1 or 2, comprising a pinion (17) which can be driven and which engages with a number of planetary gears (18, 18a; 19, 19a) which are connected to one another by means of a coupling element (11; 52) and which engage in inward-facing toothing on an annular gear (20), and a gear (49) which is mounted on a shaft (50) of a second engine or PTO and engages in toothing on the outside of the annular gear (20) or of the coupling element (52).

## Patentansprüche

1. Schiff mit zwei Schiffsschrauben, von welchen eine an einer ersten Schraubenwelle mit hohlem Aufbau befestigt ist und die andere konzentrisch in der ersten Schraubenwelle läuft, mit einer Hauptantriebsmaschine für die Schraubenwellen und einem Differential, welches zwischen die Welle der Maschine und die Schraubenwellen montiert ist und welche geeignet ist, um die Schrauben in entgegengesetzten Richtungen drehen zu lassen und welche die Maschinenleistung dynamisch über die Schraubenwellen verteilen kann, wobei das Differential über ein Zahnradgetriebe mit einer zweiten Maschine oder einer Leistungswegnahme (PTO) verbunden ist, dadurch gekennzeichnet, daß ein Antriebsritzel (17), welches auf der Welle (2) der Hauptantriebsmaschine (1) montiert ist, mit einer Anzahl von Planetengetrieben (18, 18a; 19, 19a) in Eingriff steht, die miteinander mittels eines Kopplungselementes (11; 52) verbunden sind und welche mit der nach innen gerichteten Zahnung auf einem Zahnring (20) in Eingriff stehen, mit welchem die hohle Schraubenwelle (3) in direkter Verbindung steht, dadurch daß die andere Schraubenwelle (5) eine direkte Verbindung mit dem Kopplungselement (11; 52) hat, und daß ein Zahnrad (49), welches auf der Welle (50) einer zweiten Maschine oder PTO montiert ist, mit der Zahnung auf der Außenseite eines Zahnrings (20) oder des Kopplungselements (52) in Eingriff steht.

2. Schiff nach Anspruch 1, dadurch gekennzeichnet, daß jedes Planetengetriebe ein erstes Zahnrad (18, 19) aufweist, welches mit dem Antriebsritzel (17) in Eingriff steht, und ein zweites Hilfs-Zahnrad (18a, 19a), welches mit der nach innen gerichteten Zahnung auf dem Zahnring (20) in Eingriff steht, wobei beide Zahnräder (18, 18a bzw. 19, 19a) jedes Planetengetriebes miteinander durch Wellen (42 bzw. 43) verbunden sind.

3. Differential für ein Schiff nach Anspruch 1 oder 2 aufweisend: ein Antriebsritzel (17), welches angetrieben werden kann und welches mit einer Anzahl von Planetengetrieben (18, 18a; 19, 19a) in Eingriff steht, die miteinander mittels eines Kopplungselements (11; 52) verbunden sind und die mit einer nach innen gerichteten Zahnung auf einem Zahnring (20) in Eingriff stehen, und ein Zahnrad (49), welches auf einer Welle (50) einer zweiten Maschine oder PTO montiert ist, und mit der Zahnung auf der Außenseite des Zahnrings (20) des Kopplungselements (52) in Eingriff steht.

## Revendications

1. Navire comportant deux hélices de navire, dont l'une est fixée à un premier arbre d'hélice de conception creuse et l'autre tourne de façon concentrique à l'intérieur du premier arbre d'hélice, un moteur de propulsion principal destiné aux arbres d'hélice et un différentiel qui est monté entre l'arbre du moteur et les arbres d'hélices et qui peut faire tourner les hélices dans des sens opposés et permet de répartir la puissance du moteur dynamiquement sur les arbres d'hélices, le différentiel étant accouplé par l'intermédiaire d'une transmission à engrenages à un second moteur ou à un récepteur de puissance (PTO), caractérisé en ce qu'un pignon (17) monté sur l'arbre (2) du moteur principal de propulsion (1) engrène un certain nombre d'engrenages épicycloïdaux (18, 18a, 19, 19a) qui sont liés les uns aux autres au moyen d'un élément de couplage (11 ; 52) et qui engrènent dans une denture tournée vers l'intérieur sur un engrenage en couronne (20) avec lequel l'arbre d'hélice creux (3) est en accouplement direct, en ce que l'autre arbre d'hélice (5) présente un accouplement direct avec l'élément de couplage (11 ; 52), et en ce qu'un engrenage (49) monté sur l'arbre (50) d'un second moteur ou d'un récepteur de puissance engrène dans la denture à l'extérieur d'un engrenage en couronne (20) ou de l'élément de couplage (52).

2. Navire selon la revendication 1, caractérisé en ce que chaque engrenage épicycloïdal comprend un premier engrenage (18, 19) engrenant ledit pignon (17) et un second engrenage auxiliaire (18a, 19a) engrenant ladite denture tournée vers l'intérieur sur ledit engrenage en couronne (20), les deux engrenages (18, 18a ; 19, 19a, respectivement) de chaque engrenage épicycloïdal étant liés l'un à l'autre par des arbres (42, 43, respectivement).

3. Différentiel destiné à un navire selon la revendication 1 ou 2, comprenant un pignon (17) qui peut être entraîné et qui engrène un certain nombre d'engrenages épicycloïdaux (18, 18a ; 19, 19a) qui sont liés les uns aux autres au moyen d'un élément de couplage (11 ; 52) et qui engrènent dans une denture tournée vers l'intérieur sur un engrenage en couronne (20), et un engrenage (49) qui est monté sur un arbre (50) d'un second moteur ou récepteur de puissance et engrène la denture à l'extérieur de l'engrenage en couronne (20) ou de l'élément de couplage (52).
